# EUROPEAN PATENT APPLICATION

(11) **EP 4 549 010 A1**
(43) Date of publication of application: **07.05.2025**
(21) Application number: 24807525.1
(22) Date of filing: 14.05.2024
(51) Int. Cl.: B01J 8/06, B01J 8/08, B01J 8/18

(54) **ELECTRIC HEATING REACTOR**

(30) Priority: 15.05.2023 KR 20230062245
(71) Applicant: LG Chem, Ltd., Yeongdeungpo-gu Seoul 07336 (KR)
(72) Inventor: PARK, Hongseok, Daejeon 34122 (KR); KANG, Mooseong, Daejeon 34122 (KR)
(74) Representative: Plasseraud IP
(86) International application number: PCT/KR2024/006522
(87) International publication number: WO 2024/237654

(57) **Abstract**

Disclosed is an electric heating reactorThe electric heating reactor includes: a reaction tube including a lengthwise passage through which a reactant passes; a power source configured to heat the reactant passing through the passage by supplying electric power to the reaction tube; and a pair of conductive sockets connecting the power source with the reaction tube to enable an electric current to flow through the power source and the reaction tube, wherein the reaction tube includes a first tube part having a first resistivity, and a second tube part having a second resistivity different from the first resistivity, and the reactant flowing into the first tube part is moved to the second tube part and flows out of the second tube part.

## Description

### [Technical Field]

### CROSS-REFERENCE TO RELATED APPLICATION

This application claims priority to and the benefit of Korean Patent Application No. 10-2023-0062245 filed in the Korean Intellectual Property Office on May 15, 2023, the entire contents of which are incorporated herein by reference.

The present disclosure relates to an electric heating reactor, and more particularly, to an electric heating reactor which may efficiently and uniformly maintain a temperature in the reactor by using electric heating technology, and may control a temperature for each section in the reactor.

### [Background Art]

A chemical industry may use natural gas as fuel to maintain high temperatures in various facilities (for example, crackers, reformers, reactors, or boilers). However, heating by combusting the natural gas is not only inefficient in terms of energy consumption, but also a major cause of carbon emissions. Therefore, efforts have been made to replace a heating method using the natural gas combustion with an electric heating method.

The above information disclosed in this Background section is provided only to assist in better understanding of the background of the present disclosure, and may thus include information not included in the prior art already known to those skilled in the art to which the present disclosure pertains.

### [Disclosure]

### [Technical Problem]

The present disclosure attempts to provide an electric heating reactor which may efficiently and uniformly maintain a temperature in the reactor by using electric heating technology, and may control a temperature for each section in the reactor.

### [Technical Solution]

According to an embodiment, provided is an electric heating reactor including: a reaction tube including a lengthwise passage through which a reactant passes; a power source configured to heat the reactant passing through the passage by supplying electric power to the reaction tube; and a pair of conductive sockets connecting the power source with the reaction tube to enable an electric current to flow through the power source and the reaction tube, wherein the reaction tube includes a first tube part having a first resistivity, and a second tube part having a second resistivity different from the first resistivity.

The reactant may flow into the first tube part, be moved to the second tube part, and flow out of the second tube part.

The first tube part and the second tube part may be coupled to each other by welding, flange-coupling, or screw-coupling.

The reactor may further include an insulator surrounding and thermally insulating at least a portion of the reaction tube.

The insulator may surround the reaction tube disposed between the pair of conductive sockets.

The reactor may further include a cooler for cooling at least one of the pair of conductive sockets.

The reaction tube may further include at least one third tube part disposed between the first and second tube parts and coupled to each of the first and second tube parts, the at least one third tube part may have a third resistivity, and the resistivities of the adjacent tube parts may be different from each other.

The first tube part and at least one third tube part may be coupled to each other by welding, flange-coupling, or screw-coupling, and the at least one third tube part and the second tube part may be coupled to each other by welding, flange-coupling, or screw-coupling.

### [Advantageous Effects]

As set forth above, the electric heating reactor according to the present disclosure may efficiently and uniformly maintain the temperature in the reactor by using the electric heating technology.

In addition, the electric heating reactor may regulate the temperature for each section in the reactor by fastening the plurality of tube parts having the different resistivities to each other. Therefore, the electric heating reactor may acquire the optimal yield by compensating for the temperature gradient in the reactor that is caused by the reaction.

Other effects which may be acquired or predicted by the embodiments of the present disclosure are disclosed directly or implicitly in the detailed description of the embodiments of the present disclosure. That is, various effects predicted based on the embodiments of the present disclosure are disclosed in the detailed description described below.

### [Description of the Drawings]

Embodiments in the specification may be better understood by reference to the following description in connection with the accompanying drawings in which like reference numerals refer to identical or functionally similar elements.
FIG. 1 is a schematic view showing an electric heating reactor according to an embodiment of the present disclosure.
FIG. 2 is a schematic view showing an electric heating reactor according to another embodiment of the present disclosure.
FIG. 3 shows an example of portion "A" of FIG. 2.
FIG. 4 shows another example of portion "A" of FIG. 2.
FIG. 5 shows still another example of portion "A" of FIG. 2.
FIG. 6 is a schematic view showing an electric heating reactor according to still another embodiment of the present disclosure.

It should be understood that the drawings referenced above are not necessarily drawn to scale, and present a rather simplified representation of various preferred features illustrating the basic principles of the present disclosure. For example, specific design features of the present disclosure, including a specific dimension, orientation, position, and shape, are determined in part by the particularly intended application and environment of use.

### [Mode for Invention]

A term used herein is only to describe specific embodiments, and is not intended to limit the present disclosure. A term of a single number used herein is intended to include its plural number unless the context clearly indicates otherwise. It should also be understood that the terms "include" and/or "including," when used in the specification, specify the presence of the recited features, integers, steps, operations, elements, and/or components, and do not exclude the presence or addition of one or more of other features, integers, steps, operations, elements, components, and/or groups thereof. As used herein, a term "and/or" includes any one or all combinations of the associated listed items.

Further, it should be understood that one or more of methods described below or aspects thereof may be executed by at least one controller. The term "controller" may refer to a hardware device including a memory and a processor. The memory may store program instructions, and the processor may be specifically programmed to execute program instructions to perform one or more processes described below in more detail. The controller may control operations of units, modules, components, devices, or the like, as described herein. It should also be understood that the methods described below may be executed by an apparatus including the controller in conjunction with one or more other components, as appreciated by those skilled in the art.

In addition, the controller of the present disclosure may be implemented as a non-transitory computer-readable recording medium including executable program instructions executed by the processor. An example of the computer-readable recording medium may include a read only memory (ROM), a random access memory (RAM), a compact disk read only memory (CD-ROM), a magnetic tape, a floppy disk, a flash drive, a smart card, or an optical data storage device, and is not limited thereto. The computer-readable recording medium may also be distributed throughout a computer network, and the program instructions may thus be stored and executed in a distributed manner, for example, on a telematics server or a controller area network (CAN).

According to the present disclosure, an electric heating reactor may include: a reaction tube including a passage through which a reactant passes and configured to heat the reactant passing through the passage; a power source configured to supply electric power to the reaction tube; and a pair of conductive sockets connecting the power source with the reaction tube to enable an electric current to flow through the power source and the reaction tube. When the electric power of the power source is supplied to the reaction tube through the conductive socket, the reaction tube may generate heat and heat the reactant in the reactor. In this way, the electric heating reactor according to the present disclosure may efficiently and uniformly maintain a temperature in the reactor by using electric heating technology.

The reaction tube may include a first tube part having a first resistivity and a second tube part having a second resistivity different from the first resistivity and coupled to the first tube part. When the electric power of the power source is supplied to the reaction tube, the first and second tube parts having the different resistivities may generate heat at different temperatures. Here, the number of tube parts is not limited to two. The electric heating reactor may regulate a temperature for each section in the reactor by respectively disposing the plurality of tube parts in a plurality of sections. Therefore, the electric heating reactor may acquire the optimal yield by compensating for a temperature gradient in the reactor that is caused by reaction.

The electric heating reactor may further include an insulator surrounding and thermally insulating the reaction tube. Therefore, the electric heating reactor may improve energy efficiency by reducing unnecessary heat loss that is wasted outside the reactor.

In addition, the electric heating reactor may further include a cooler for cooling the conductive socket. The cooler may suppress a temperature rise of the conductive socket and improve stability of a reactor operation.

Hereinafter, embodiments of the present disclosure are described in detail with reference to the accompanying drawings.

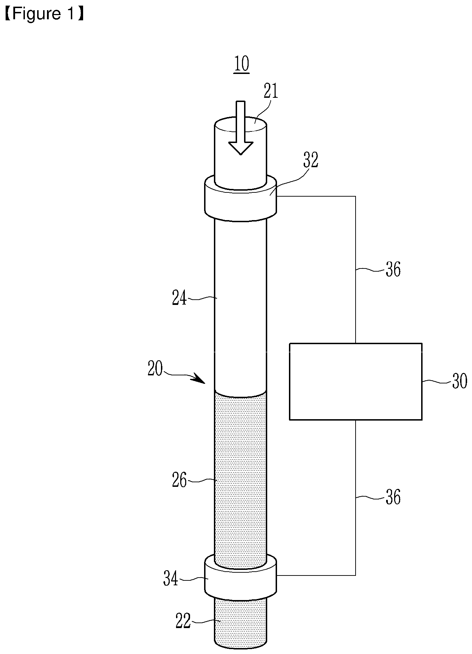

FIG. 1 is a schematic view showing an electric heating reactor according to an embodiment of the present disclosure.

As shown in FIG. 1, an electric heating reactor 10 according to an embodiment of the present disclosure may be configured to receive the electric power to generate heat and heat the reactant in the reactor by using the heat. The electric heating reactor 10 may include a reaction tube 20, a power source 30, and a pair of conductive sockets (first and second conductive sockets) 32 and 34.

The reaction tube 20 may be made of a metal material having high resistivity and include a lengthwise passage through which the reactant passes. For example, the reaction tube 20 may have an annular pipe shape and include the lengthwise passage formed therein. When the electric power is applied to the reaction tube 20, the reaction tube 20 may generate heat due to the high resistivity, and the heat may heat the reactant in the passage.

The reaction tube 20 may include a first tube part 24 and a second tube part 26. The first tube part 24 may define a portion of the reaction tube 20 and have a first resistivity ρ1. An inlet 21 may be formed at one end of the first tube part 24, and the reactant required for the reaction may flow into the reaction tube 20, particularly the first tube part 24, through the inlet 21. The second tube part 26 may define the remaining portion of the reaction tube 20, have a second resistivity ρ2 different from the first resistivity, and have one end coupled to the other end of the first tube part 24. An outlet 22 may be formed at the other end of the second tube part 26, and the reactant that completed the reaction and/or an unreacted reactant that has yet to be reacted may flow out of the reaction tube 20, particularly the second tube part 26, through the outlet 22. The first resistivity and the second resistivity may be set based on the temperature gradient of the reactant in the passage of the reaction tube 20. For example, as the reactant passes through the passage and the reaction of the reactant progresses, the temperature in the reactant may be changed and the temperature gradient may occur. The temperature gradient based on the reaction of the reactant or a location of the reactant in the passage may be determined in advance through experiments or the like, and the first resistivity and the second resistivity may be set to complement the temperature gradient to thus acquire the optimal yield.

A first passage formed in the first tube part 24 may be connected to a second passage formed in the second tube part 26, and a diameter of the first passage and a diameter of the second passage may be the same as each other or nearly similar to each other. Accordingly, the reactant flowing into the first passage through the inlet 21 may react sequentially while passing through the first and second passages in the reaction tube 20 and flow out of the second passage through the outlet 22. In addition, the diameters of the first and second passages may be the same as each other or nearly similar to each other, and accordingly, a flow resistance of the reactant passing through the first and second passages may not be increased.

The power source 30 may be configured to supply the electric power to the reaction tube 20. The power source 30 may be an alternating current (AC) power source or a direct current (DC) power source.

The first or second conductive socket 32 or 34 may supply the electric power of the power source 30 to the reaction tube 20, thus enabling the reaction tube 20 to generate heat.

The first conductive socket 32 may be mounted on one end of the first tube part 24, and electrically connect the power source 30 with the first tube part 24 through a wire 36.

In addition, the second conductive socket 34 may be mounted on the other end of the second tube part 26, and electrically connect the power source 30 with the second tube part 26 through the wire 36.

The electric power of the same power source 30 may be transferred to the first and second tube parts 24 and 26 through the first and second conductive sockets 32 and 34. However, the first and second tube parts 24 and 26 may generate heat at the different temperatures because the first and second resistivities of the first and second tube parts 24 and 26 are different from each other.

Therefore, the temperatures of the first and second tube parts 24 and 26 can be set differently through only the wiring with one power source 30, thereby acquiring the optimal yield.

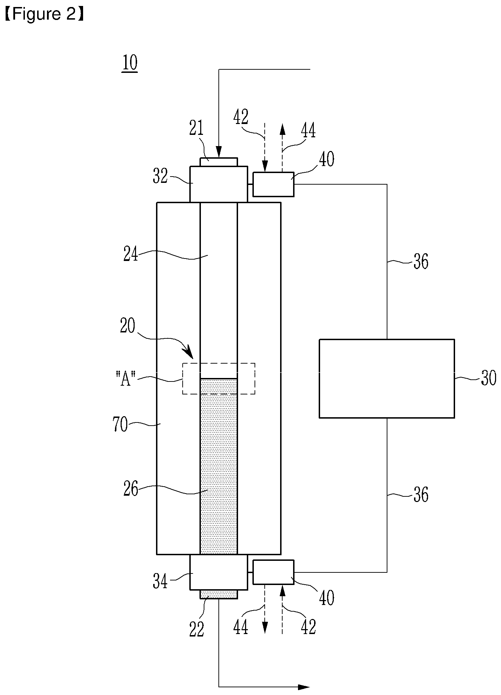

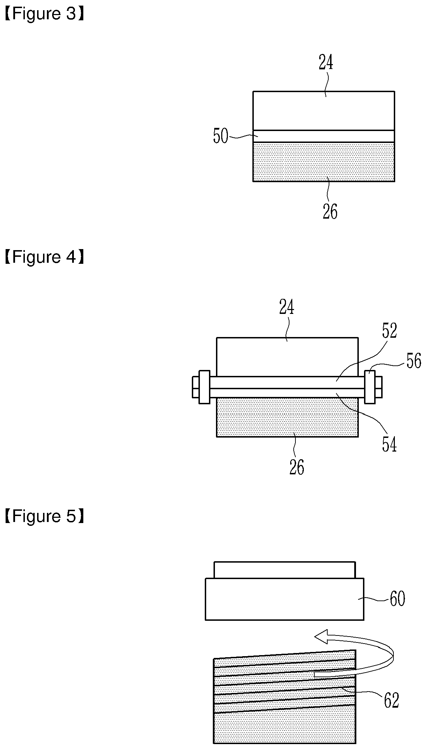

FIG. 2 is a schematic view showing an electric heating reactor according to another embodiment of the present disclosure, FIG. 3 shows an example of portion "A" of FIG. 2, FIG. 4 shows another example of portion "A" of FIG. 2, and FIG. 5 shows still another example of portion "A" of FIG. 2.

As shown in FIG. 2, the electric heating reactor 10 according to another embodiment of the present disclosure may include the electric heating reactor 10 according to an embodiment of the present disclosure, a cooler 40, and an insulator 70. As described above, the electric heating reactor 10 may include the reaction tube 20, the power source 30, and the pair of conductive sockets 32 and 34.

In the reaction tube 20, the first and second tube parts 24 and 26 having different resistivities may be coupled to each other to thus be electrically connected to each other. In addition, by the first and second tube parts 24 and 26 coupled to each other, the reactant that flows into the first tube part 24 through the inlet 21 may be moved to the second tube part 26 and flow out of the second tube part 26 through the outlet 22. Electrical and fluid coupling of the first and second tube parts 24 and 26 may be achieved through various coupling methods, and several examples of the various coupling methods are shown in FIGS. 3 to 5.

As shown in FIG. 3, the first and second tube parts 24 and 26 may be coupled to each other by welding. In more detail, the other end of the first tube part 24 and one end of the second tube part 26 may be brought into contact with each other and a high temperature may be applied to this contact portion to thus join an outer periphery of the other end of the first tube part 24 with an outer periphery of one end of the second tube part 26. Accordingly, a weld part 50 may be formed on an outer periphery of the corresponding portion.

As shown in FIG. 4, the first and second tube parts 24 and 26 may be flange-coupled to each other. In more detail, a first flange 52 having a diameter larger than the first tube part 24 may be formed at the other end of the first tube part 24, a second flange 54 having a diameter larger than the second tube part 26 may be formed at one end of the second tube part 26, and the first and second flanges 52 and 54 may be fastened to each other by using fastening parts 56 such as screws, bolts, nuts, pins, and rivets, thereby coupling the first and second tube parts 24 and 26 to each other.

As shown in FIG. 5, the first and second tube parts 24 and 26 may be screw-coupled to each other. In more detail, a female thread 60 may be formed on an inner surface of one of the other end of the first tube part 24 and one end of the second tube part 26, a male thread 62 may be formed on an outer surface of the other of the other end of the first tube part 24 and one end of the second tube part 26, and the female thread 60 and the male thread 62 may be screw-coupled to each other, thereby coupling the first and second tube parts 24 and 26 to each other.

Referring back to FIG. 2, the cooler 40 may be disposed to be near at least one of the first and second conductive sockets 32 and 34 and configured to cool the conductive socket 32 or 34 through the heat transfer with the conductive socket 32 or 34. For this purpose, the cooler 40 may be connected to a refrigerant inlet line 42, and a cold refrigerant may thus flow into the cooler 40 through the refrigerant inlet line 42, and the cooler 40 may be connected to a refrigerant outlet line 44, and the refrigerant heat-exchanged with the conductive socket 32 or 34 may thus flow out of the cooler 40 through the refrigerant outlet line 44. Here, the description describes that the cooler 40 is disposed to be near the first or second conductive socket 32 or 34 and the refrigerant exchanges heat with the conductive socket 32 or 34. However, the type and location of the cooler 40 are not limited thereto. For example, the cooler 40 may be a cooler using a Peltier element or a refrigerant jacket located in the conductive socket 32 or 34.

The insulator 70 may surround and thermally insulate at least a portion of the reaction tube 20. FIG. 2 shows that the insulator 70 surrounds the reaction tube 20 disposed between the pair of conductive sockets 32 and 34, and the present disclosure is not limited thereto. For example, the insulator 70 may surround the entire reaction tube 20. The insulator 70 may surround and thermally insulate the reaction tube 20, thereby improving energy efficiency of the reactor by reducing unnecessary heat loss to the outside of the reaction tube 20, and efficiently and uniformly maintain the temperature in the reaction tube 20.

In addition, the insulator 70 may also electrically block the reaction tube 20 and its exterior, thereby preventing a safety accident that may occur due to the electric current that may flow in the reaction tube 20.

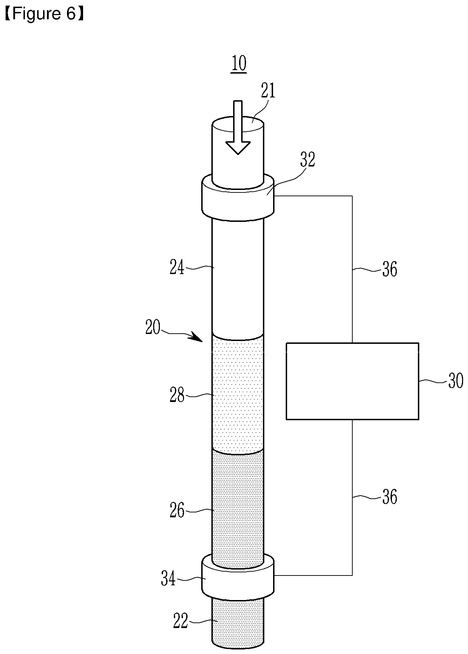

FIG. 6 is a schematic view showing an electric heating reactor according to still another embodiment of the present disclosure.

As shown in FIG. 6, the electric heating reactor 10 according to still another embodiment of the present disclosure may include the reaction tube 20, the power source 30, and the pair of conductive sockets 32 and 34. The reaction tube 20 may include the first tube part 24, the second tube part 26, and at least one third tube part 28.

The first tube part 24 may define a portion of the reaction tube 20 and have the first resistivity ρ1. The inlet 21 may be formed at one end of the first tube part 24, and the reactant required for the reaction may flow into the reaction tube 20, particularly the first tube part 24, through the inlet 21. The second tube part 26 may define another portion of the reaction tube 20 and have the second resistivity ρ2 different from the first resistivity. The outlet 22 may be formed at the other end of the second tube part 26, and the reactant that completed the reaction and/or the unreacted reactant that has yet to be reacted may flow out of the reaction tube 20, particularly the second tube part 26, through the outlet 22. At least one third tube part 28 may define the remaining portion of the reaction tube 20 and be disposed between the first tube part 24 and the second tube part 26. At least one third tube part 28 may have a third resistivity ρ3 that may be different from the first or second resistivity. If one third tube part 28 is provided, the third resistivity may be different from the first and second resistivities. Alternatively, if two or more third tube parts 28 are provided, the number of third resistivities may be the same as the number of the third tube parts 28, and one third resistivity may be different from the first, second, and/or the other third resistivity. It is apparent that if two or more third tube parts 28 are provided, any one third resistivity may be the same as the first, second, or any other third resistivity. However, the resistivities of the adjacent tube parts may be different from each other.

One end of at least one third tube part 28 may be coupled to the other end of the first tube part 24, and the other end of at least one third tube part 28 may be coupled to one end of the second tube part 26. The first tube part 24 and at least one third tube part 28 may be coupled to each other by welding, flange-coupling, or screw-coupling, and at least one third tube part 28 and the second tube part 26 may be coupled to each other by welding, flange-coupling, or screw-coupling. The first, second, and third resistivities may be set based on the temperature gradient of the reactant in the passage of the reaction tube 20. For example, as the reactant passes through the passage and the reaction of the reactant progresses, the temperature in the reactant may be changed and the temperature gradient may occur. The temperature gradient based on the reaction of the reactant or a location of the reactant in the passage may be determined in advance through the experiments or the like, and the first, second, and third resistivities may be set to complement the temperature gradient to thus acquire the optimal yield.

The first passage formed in the first tube part 24 may be connected to at least one third passage formed in the third tube part 28, the third passage may be connected to the second passage formed in the second tube part 26, and the diameters of the first, second, and third passages may be the same as one another or nearly similar to one another. Accordingly, the reactant flowing into the first passage through the inlet 21 may react sequentially while passing through the first, third, and second passages in the reaction tube 20 and flow out of the second passage through the outlet 22. In addition, the diameters of the first, second, and third passages may be the same as one another or nearly similar to one another, and accordingly, a flow resistance of the reactant passing through the first, second, and third passages may not be increased.

The power source 30 may be configured to supply the electric power to the reaction tube 20, and the first or second conductive socket 32 or 34 may supply the electric power of the power source 30 to the reaction tube 20 to thus enable the reaction tube 20 to generate heat.

Although the embodiments of the present disclosure have been described hereinabove, the scope of the present disclosure is not limited thereto, and all equivalent modifications easily modified by those skilled in the art to which the present disclosure pertains are intended to fall within the scope and spirit of the present disclosure.

## Claims

1. An electric heating reactor comprising:
a reaction tube including a lengthwise passage through which a reactant passes;
a power source configured to heat the reactant passing through the passage by supplying electric power to the reaction tube; and
a pair of conductive sockets connecting the power source with the reaction tube to enable an electric current to flow through the power source and the reaction tube,
wherein the reaction tube includes
a first tube part having a first resistivity, and
a second tube part having a second resistivity different from the first resistivity.

2. The reactor of claim 1, wherein
the reactant flows into the first tube part, is moved to the second tube part, and flows out of the second tube part.

3. The reactor of claim 1, wherein
the first tube part and the second tube part are coupled to each other by welding, flange-coupling, or screw-coupling.

4. The reactor of claim 1, further comprising
an insulator surrounding and thermally insulating at least a portion of the reaction tube.

5. The reactor of claim 4, wherein
the insulator surrounds the reaction tube disposed between the pair of conductive sockets.

6. The reactor of claim 1, further comprising
a cooler for cooling at least one of the pair of conductive sockets.

7. The reactor of claim 1, wherein
the reaction tube further includes at least one third tube part disposed between the first and second tube parts and coupled to each of the first and second tube parts,
the at least one third tube part has a third resistivity, and
the resistivities of the adjacent tube parts are different from each other.

8. The reactor of claim 7, wherein
the first tube part and at least one third tube part are coupled to each other by welding, flange-coupling, or screw-coupling, and the at least one third tube part and the second tube part are coupled to each other by welding, flange-coupling, or screw-coupling.
